# EUROPÄISCHE PATENTSCHRIFT

(11) **EP 2 938 986 B1**
(45) Veröffentlichungstag und Bekanntmachung des Hinweises auf die Patenterteilung: **02.08.2017**
(21) Anmeldenummer: 13814920.8
(22) Anmeldetag: 19.12.2013
(51) Int. Cl.: G01L 19/06, G01L 19/14, G01D 11/24, G01L 19/00

(54) **VERFAHREN ZUM HERSTELLEN EINES SENSORGEHÄUSES SOWIE ENTSPRECHENDES SENSORGEHÄUSE**
METHOD FOR PRODUCING A SENSOR HOUSING AND CORRESPONDING SENSOR HOUSING
PROCÉDÉ DE FABRICATION D'UN BOÎTIER DE CAPTEUR ET BOÎTIER DU CAPTEUR CORRESPONDANT

(30) Priorität: 27.12.2012 DE 102012224380; 27.12.2012 DE 102012224383; 17.01.2013 DE 102013200631; 17.01.2013 DE 102013200633; 17.01.2013 DE 102013200668; 08.05.2013 DE 102013208534
(43) Veröffentlichungstag der Anmeldung: 04.11.2015
(73) Patentinhaber: Robert Bosch GmbH, 70442 Stuttgart (DE)
(72) Erfinder: HENZLER, Stephan, 72810 Gomaringen (DE); HERRMANN, Alexander, 72764 Reutlingen (DE); WOERNLE, Wolfgang, 72149 Neustetten (DE); BERTSCH, Benjamin, 72805 Lichtenstein (DE)
(86) Internationale Anmeldenummer: PCT/EP2013/077529
(87) Internationale Veröffentlichungsnummer: WO 2014/102151

(56) Entgegenhaltungen:
- DE-A1-102007 026 446

## Beschreibung

Die Erfindung betrifft ein Verfahren zum Herstellen eines Sensorgehäuses, das wenigstens eine Gehäuseschale und mehrere an der Gehäuseschale angeordnete, geschlossen umlaufende Dichtungen aufweist. Die Erfindung betrifft weiterhin ein Sensorgehäuse.

### Stand der Technik

Das Sensorgehäuse ist beispielsweise Bestandteil einer Sensoranordnung, insbesondere einer Drucksensoranordnung. In letzterem Fall dient das Sensorgehäuse der Aufnahme eines Drucksensors. Bevorzugt ist die Sensoranordnung Bestandteil einer Sicherheitseinrichtung eines Kraftfahrzeugs. Insbesondere dient sie der Ansteuerung eines Airbags, beispielsweise eines Seitenairbags. In diesem Fall wird das Sensorgehäuse vorzugsweise an einer Zwischenwand in einer Seitentür des Kraftfahrzeugs angeordnet. Die Zwischenwand trennt die Seitentür in einen Nassraum und einen Trockenraum auf, wobei das Sensorgehäuse vorzugsweise in dem Trockenraum angeordnet ist, die Drucksensoranordnung jedoch dem Aufnehmen eines Drucks in dem Nassraum dient. Beispielsweise ist es vorgesehen, den Druck in dem Nassraum zu überwachen und bei einer plötzlichen Druckänderung mit bestimmten Charakteristika, beispielsweise bei einem plötzlichen Druckanstieg, den Airbag, insbesondere den Seitenairbag, auszulösen.

Um den in dem Sensorgehäuse angeordneten Sensor vor äußeren Einflüssen zu schützen und auch eine Trennung zwischen dem Nassraum und dem Trockenraum zu ermöglichen, sind an dem Sensorgehäuse mehrere Dichtungen angeordnet. Diese sind vorzugsweise geschlossen umlaufend ausgebildet, liegen also insbesondere in Ringform vor und sind mithin beispielsweise kreisringförmig, oval oder stadionförmig. Üblicherweise wird das Sensorgehäuse hergestellt, indem die Gehäuseschale hergestellt beziehungsweise bereitgestellt wird und nachfolgend die Dichtungen einzeln an die Gehäuseschale angespritzt werden. Dies ist jedoch aufwendig, weil das Ausbilden der Dichtungen in mehreren Arbeitsschritten erfolgen muss.

Aus dem Stand der Technik ist beispielsweise die Druckschrift DE 10 2007 026 446 A1 bekannt. Diese betrifft ein schnell montierbares zweiteiliges Sensorgehäuse für Sensoren mit Luftkontakt, umfassend ein erstes Gehäuseteil, in dem sich ein Sensor mit mindestens einer sensitiven Baugruppe befindet, ein zweites Gehäuseteil, das mit dem ersten Gehäuseteil über schnell und ohne Werkzeug verbindbare Verbindungsmittel verbunden werden kann, um ein Gehäuse zu formen, das den Sensor umschließt, wobei das zweite Gehäuseteil mindestens eine Öffnung aufweist, die den Zutritt der umgebenden Atmosphäre zum Sensor ermöglicht, und ein Gehäuseteil eine Dichtung aufweist, die bei der Verbindung der beiden Gehäuseteile für eine Abdichtung des Sensorgehäuses im Kontaktbereich zwischen den beiden Gehäuseteilen sorgt, und eine Dichtung aufweist, die bei der Verbindung der beiden Gehäuseteile für eine Aufteilung des Innenraums des Sensorgehäuses in einen Bereich, der über die Öffnung im zweiten Gehäuseteil mit der umgebenden Atmosphäre in Verbindung steht, und einen Bereich, der hermetisch gegenüber der Sensorumgebung abgeschlossen ist, sorgt.

### Offenbarung der Erfindung

Demgegenüber weist das Verfahren zum Herstellen eines Sensorgehäuses mit den Merkmalen des Anspruchs 1 den Vorteil auf, dass eine einfache und kostengünstige Herstellung des Sensorgehäuses und insbesondere der Dichtungen möglich ist. Dies wird erfindungsgemäß erreicht, indem bei dem Ausbilden der Dichtungen jeweils zwei der Dichtungen über einen einstückig und materialeinheitlich mit den Dichtungen ausgebildeten Verbindungssteg miteinander verbunden werden. Die Dichtungen liegen also nicht getrennt voneinander an dem Sensorgehäuse vor. Vielmehr sind die Dichtungen über den wenigstens einen Verbindungssteg miteinander verbunden. Auf diese Art und Weise wird es möglich, die Dichtungen während eines einzigen Herstellungsschritts auszubilden. Prinzipiell kann eine beliebige Anzahl Dichtungen vorgesehen sein. Besonders bevorzugt liegen jedoch wenigstens drei oder wenigstens vier Dichtungen an der Gehäuseschale vor. Zwischen jeweils zwei dieser Dichtungen ist nun ein Verbindungssteg vorgesehen, sodass bei einer entsprechenden Anzahl Dichtungen auch mehrere Verbindungsstege vorliegen können.
Die Gehäuseschale besteht beispielsweise aus einem Kunststoff, insbesondere aus einem Thermoplast. Die Dichtung wird insbesondere aus Silikon hergestellt, insbesondere mit einem Silikonspritzgussverfahren, sodass die Dichtung als Silikonspritzgussdichtung vorliegt. Die Verbindungsstege können ebenso wie die Dichtungen permanent an der Gehäuseschale befestigt sein. Es kann jedoch auch vorgesehen sein, die Verbindungsstege nach dem Ausbilden der Dichtungen zu entfernen.

Bei der Erfindung ist es vorgesehen, die folgenden Schritte vorzunehmen: Bereitstellen der Gehäuseschale; Einbringen der Gehäuseschale in eine Gussform, sodass mehrere in Umfangsrichtung geschlossen ausgestaltete Dichtungsaufnahmekanäle ausgebildet sind, wobei jeweils zwei der Dichtungsaufnahmekanäle über einen Überlaufkanal strömungstechnisch miteinander verbunden werden; und Einleiten eines Gießmaterials über einen einzigen der Dichtungsaufnahmekanäle an einem Einspritzpunkt, bis alle der Dichtungsaufnahmekanäle mit dem Gießmaterial gefüllt sind, zum Ausbilden der Dichtungen in allen Dichtungsaufnahmekanälen. Die Dichtungen werden an die Gehäuseschale angespritzt. Zu diesem Zweck sind die Dichtungsaufnahmekanäle an der Position und mit den Abmessungen der herzustellenden Dichtungen bezüglich der Gehäuseschale angeordnet.
Die Dichtungsaufnahmekanäle werden von der Gehäuseschale und der Gussform gemeinsam ausgebildet. So kann es vorgesehen sein, dass wenigstens ein Bereich wenigstens eines der Dichtungsaufnahmekanäle als Dichtungsaufnahmenut in der Gehäuseschale ausgebildet ist. Der weitere Bereich der Dichtungsaufnahmekanäle wird von der Gussform bereitgestellt. Es kann auch vorgesehen sein, dass die Gehäuseschale im Bereich der auszubildenden Dichtungen plan ist und die Dichtungsaufnahmekanäle vollständig in der Gussform vorliegen. Ebenso kann die Gehäuseschale im Bereich der in der Gussform vorliegenden Dichtungsaufnahmekanäle in diese hineinragende Vorsprünge aufweisen.

Zum Herstellen des Verbindungsstegs ist der Überlaufkanal vorgesehen, welcher jeweils zwei der Dichtungsaufnahmekanäle strömungstechnisch miteinander verbindet. Bei einem Einbringen des Gießmaterials in einen der Dichtungsaufnahmekanäle wird also das Gießmaterial, sobald dieser Dichtungsaufnahmekanal ausreichend gefüllt ist, über den Überlaufkanal in den strömungstechnisch angeschlossenen Dichtungsaufnahmekanal überströmen und diesen ebenfalls ausfüllen. So können die in diesen Dichtungsaufnahmekanälen vorliegenden beziehungsweise auszubildenden Dichtungen in einem einzigen Arbeitsschritt hergestellt werden. Der Überlaufkanal kann analog zu den Dichtungsaufnahmekanälen vollständig in der Gehäuseschale vorliegen, vollständig in der Gussform vorliegen oder jeweils teilweise in der Gehäuseschale und der Gussform ausgebildet sein.

Vorzugsweise wird der Überlaufkanal dabei von der Gehäuseschale und der Gussform gemeinsam ausgebildet, insbesondere begrenzt. Es kann jedoch auch vorgesehen sein, dass der Überlaufkanal wenigstens bereichsweise vollständig von der Gehäuseschale begrenzt ist, insbesondere wenn er in Form eines die Gehäuseschale durchgreifenden Durchbruchs vorliegt.

Wie bereits vorstehend angedeutet, wird nach dem Einbringen der Gehäuseschale in die Gussform das Gießmaterial eingeleitet. Dies erfolgt in lediglich einen einzigen der Dichtungsaufnahmekanäle, von welchem ausgehend sich das Gießmaterial über den wenigstens einen Überlaufkanal in die strömungstechnisch nachfolgenden Dichtungsaufnahmekanäle verteilt. Das Einleiten des Gießmaterials an dem Einspritzpunkt erfolgt solange, bis alle Dichtungsaufnahmekanäle mit dem Gießmaterial gefüllt sind, insbesondere vollständig gefüllt sind. Durch das Einleiten des Gießmaterials und ein nachfolgendes Aushärten werden die Dichtungen in den Dichtungsaufnahmekanälen ausgebildet. Das Gießmaterial ist dabei derart gewählt, dass es eine Verbindung mit der Gehäuseschale eingeht. Nach dem Aushärten sind also die Dichtungen mit der Gehäuseschale derart verbunden, dass die Gussform ohne Weiteres entfernt werden kann, die Dichtungen jedoch an der Gehäuseschale verbleiben und dort sicher und dauerhaft gehalten sind.

Eine weitere Ausgestaltung der Erfindung sieht vor, dass wenigstens zwei der Dichtungsaufnahmekanäle auf gegenüberliegenden Seiten der Gehäuseschale ausgebildet werden, wobei zumindest einer der Überlaufkanäle wenigstens teilweise in Form eines die Gehäuseschale durchgreifenden Durchbruchs ausgebildet wird. In Bezug auf eine mögliche Montagesituation des Sensorgehäuses bedeutet dies, dass einer der Dichtungsaufnahmekanäle und mithin die entsprechende Dichtung der Zwischenwand der Seitentüre des Kraftfahrzeugs zugewandt ist, während der andere Dichtungsaufnahmekanal beziehungsweise die entsprechende Dichtung auf der der Zwischenwand abgewandten Seite der Gehäuseschale vorliegt.

Um dies zu erzielen, ist es notwendig, den Durchbruch vorzusehen, welcher die Gehäuseschale durchgreift und dabei im Querschnitt gesehen vollständig von der Gehäuseschale umgriffen ist. Es ist nicht notwendig, dass der Durchbruch den gesamten Überlaufkanal ausbildet, wenngleich dies selbstverständlich vorgesehen sein kann. Vielmehr kann der Durchbruch lediglich einen Teil des Überlaufkanals ausbilden.

In einer weiteren bevorzugten Ausgestaltung der Erfindung ist vorgesehen, dass wenigstens zwei der Dichtungsaufnahmekanäle in vertikaler Richtung und/oder in radialer Richtung an unterschiedlichen Positionen ausgebildet werden. Wiederum in der Montagesituation gesehen ist unter der vertikalen Richtung eine Richtung entlang einer auf der Zwischenwand senkrecht stehenden Achse gemeint. Die radiale Richtung liegt dabei senkrecht zu der vertikalen Richtung vor. Die Dichtungsaufnahmekanäle und mithin die Dichtungen können nun grundsätzlich unterschiedlich angeordnet sein. Insbesondere unterscheiden sie sich in ihrer Anordnung in vertikaler und/oder in radialer Richtung beziehungsweise in den entsprechenden Abmessungen. So kann es beispielsweise vorgesehen sein, dass die Dichtungsaufnahmekanäle unterschiedliche Abmessungen aufweisen und in Draufsicht gesehen ineinander geschachtelt angeordnet sind. Ein Beispiel für die Anordnung der Dichtungsaufnahmekanäle in unterschiedlicher vertikaler Position wurde bereits vorstehend angesprochen. Sollen die Dichtungen beziehungsweise die Dichtungsaufnahmekanäle auf den gegenüberliegenden Seiten der Gehäuseschale vorliegen, so sind sie in vertikaler Richtung an unterschiedlichen Positionen vorgesehen.
In einer weiteren Ausgestaltung der Erfindung ist vorgesehen, dass die Dichtungsaufnahmekanäle derart ausgebildet werden, dass alle der Dichtungsaufnahmekanäle eine gedachte gemeinsame Achse in Umfangsrichtung vollständig umgreifen. Diese gemeinsame Achse verläuft beispielsweise in der vorstehend bereits definierten vertikalen Richtung. Die Dichtungsaufnahmekanäle sind nun derart angeordnet, dass die später ausgebildeten Dichtungen alle um diese gemeinsame Achse in Umfangsrichtung herum verlaufen und diese insbesondere vollständig umgreifen, sodass die geschlossen umlaufenden Dichtungen ausgebildet sind. Bevorzugt ist es vorgesehen, dass die Dichtungsaufnahmekanäle in Draufsicht, also in Richtung der gemeinsamen Achse gesehen, in radialer Richtung voneinander beabstandet sind, sich also einander nicht überlappen. Die Erfindung sieht vor, dass zusätzlich zu den Dichtungsaufnahmekanälen ein Überlaufraum ausgebildet wird, wobei der in Strömungsrichtung des Gießmaterials am weitesten stromabwärts angeordnete der Dichtungsaufnahmekanäle über einen weiteren Überlaufkanal mit dem Überlaufraum strömungsverbunden ist. Analog zu den Dichtungsaufnahmekanälen kann der Überlaufraum vollständig in der Gehäuseschale, vollständig in der Gussform oder sowohl in der Gehäuseschale als auch in der Gussform vorliegen. Auch der Überlaufraum wird jedoch gemeinsam von der Gehäuseschale und der Gussform ausgebildet, also von diesem jeweils wenigstens bereichsweise begrenzt. Der Überlaufraum dient dem Aufnehmen von überschüssigem Gießmaterial, nach dem vollständigen Füllen aller Dichtungsaufnahmekanäle mit dem Gießmaterial.
Auf diese Art und Weise werden Lunker, Lufteinschlüsse in dem Gießmaterial und ähnliches aus den Dichtungsaufnahmekanälen in den Überlaufraum gedrängt. Auch ein unvollständiges Ausspritzen der Dichtungsaufnahmekanäle wird verhindert. Entsprechend können die Dichtungen durch das Einleiten des Gießmaterials in die Dichtungsaufnahmekanäle und anschließend in den Überlaufraum mit hoher Qualität und sehr zuverlässig hergestellt werden. Der Überlaufraum ist über den Überlaufkanal an denjenigen Dichtungsaufnahmekanal angeschlossen, welcher am weitesten stromabwärts liegt, also strömungstechnisch am weitesten von dem Einspritzpunkt entfernt vorliegt. Für den weiteren Überlaufkanal gilt das vorstehend für den Überlaufkanal bereits Ausgeführte; er stellt mithin ebenfalls einen derartigen Überlaufkanal dar.

In einer bevorzugten Ausgestaltung der Erfindung ist vorgesehen, dass der Einspritzpunkt demjenigen der Überlaufkanäle gegenüberliegend angeordnet wird, der demselben der Dichtungsaufnahmekanäle zugeordnet ist wie der Einspritzpunkt. Der am weitesten stromaufwärts angeordnete der Dichtungsaufnahmekanäle weist den Einspritzpunkt und den Überlaufkanal beziehungsweise einen der Überlaufkanäle auf. Um ein möglichst vollständiges Füllen dieses Dichtungsaufnahmekanals zu ermöglichen, wird der Überlaufkanal beziehungsweise die Einmündung des Überlaufkanals in den Dichtungsaufnahmekanal strömungstechnisch so weit wie möglich von dem Einspritzpunkt entfernt angeordnet. Wenn das Gießmaterial den Überlaufkanal während des Einleitens erreicht, ist der Dichtungsaufnahmekanal entsprechend bereits vollständig oder zumindest nahezu vollständig mit dem Gießmaterial gefüllt.

Eine weitere Ausgestaltung der Erfindung sieht vor, dass zwei der Überlaufkanäle, die an Mündungsstellen in denselben der Dichtungsaufnahmekanäle einmünden, derart ausgebildet werden, dass sich die Mündungsstellen bezüglich dieses Dichtungsaufnahmekanals gegenüberliegen. Der Dichtungsaufnahmekanal weist insoweit zwei der Überlaufkanäle auf, wobei auch der vorstehend erwähnte weitere Überlaufkanal als ein derartiger Überlaufkanal zu verstehen ist. Es gilt nun im Grundsatz dasselbe wie für die Anordnung von Einspritzpunkt und Überlaufkanal zueinander. Die beiden Überlaufkanäle beziehungsweise deren Mündungsstellen sollen strömungstechnisch soweit als möglich voneinander entfernt an dem Dichtungsaufnahmekanal vorliegen. Entsprechend liegen sie sich bezüglich dieses Dichtungsaufnahmekanals gegenüber. So wird das vorstehend bereits beschriebene vollständige Füllen des Dichtungsaufnahmekanals mit dem Gießmaterial gewährleistet.

Schließlich kann vorgesehen sein, dass bei einer Montage ein Gehäusedeckel mit wenigstens einer der Dichtungen derart in Dichtkontakt gebracht wird, dass die Dichtung zum dichtenden Abdecken in Richtung des Durchbruchs gedrängt wird. Der Gehäusedeckel wird bei der Montage an der Gehäuseschale befestigt. Nach der Montage steht der Gehäusedeckel in Dichtkontakt mit einer der an der Gehäuseschale angeordneten Dichtungen. Insbesondere liegt der Gehäusedeckel vollflächig dichtend an der Dichtung an. Dieser Dichtung ist bevorzugt derjenige der Überlaufkanäle zugeordnet, welcher wenigstens teilweise als Durchbruch vorliegt. Um ein Eindringen von Fremdstoffen durch diesen Durchbruch hindurch zu verhindern, soll nun der Gehäusedeckel nach der Montage die Dichtung in Richtung des Durchbruchs drängen, und zwar derart, dass die Dichtung den Durchbruch dichtend übergreift und verschließt.

Die Erfindung betrifft weiterhin ein Sensorgehäuse, insbesondere hergestellt gemäß den vorstehenden Ausführungen, mit wenigstens einer Gehäuseschale und mehreren an der Gehäuseschale angeordneten, geschlossen umlaufenden Dichtungen. Dabei ist vorgesehen, dass jeweils zwei der Dichtungen über einen einstückig und materialeinheitlich mit den Dichtungen ausgebildeten Verbindungssteg miteinander verbunden sind. Auf die Vorteile einer derartigen Ausgestaltung des Sensorgehäuses beziehungsweise einer derartigen Vorgehensweise wurde bereits hingewiesen. Das Sensorgehäuse sowie das entsprechende Verfahren können gemäß den vorstehenden Ausführungen weitergebildet sein, sodass insoweit auf diese verwiesen wird. Die Dichtungen und der Verbindungssteg sind einstückig und materialeinheitlich ausgebildet. Das bedeutet, dass sie stoffschlüssig miteinander verbunden sind und aus demselben Material bestehen. Bevorzugt werden sie während desselben Arbeitsschritts hergestellt, wobei dieses Herstellen nahezu gleichzeitig während eines einzigen Gießvorgangs erfolgt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Explosionsdarstellung einer Sensoranordnung, mit einem Sensorgehäuse, das wenigstens eine Gehäuseschale und einen Gehäusedeckel umfasst, und mit einem Sensor,
- Figur 2: eine Detailansicht der Gehäuseschale, und
- Figur 3: eine Darstellung der montierten Sensoranordnung.

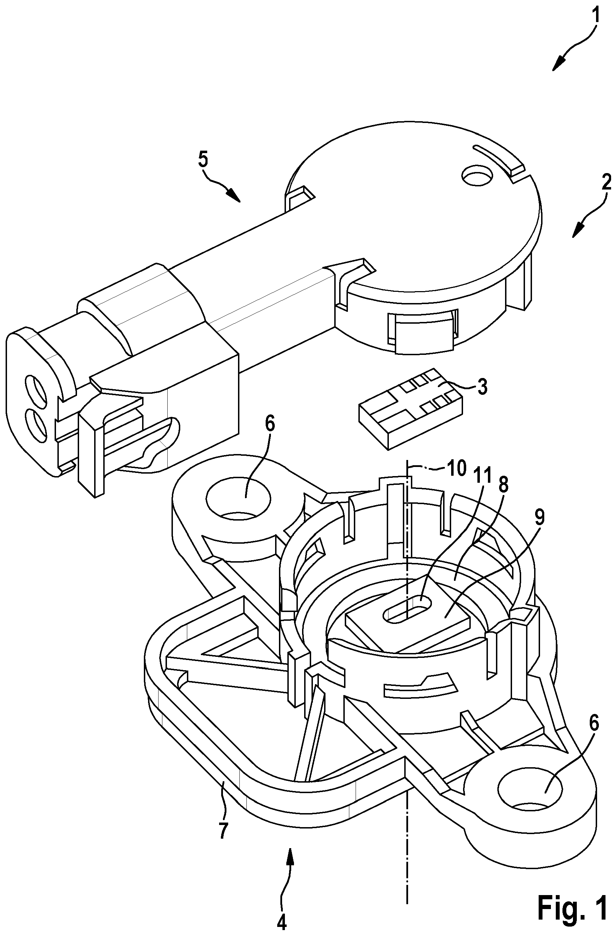

Die Figur 1 zeigt eine Explosionsdarstellung einer Sensoranordnung 1, insbesondere einer Drucksensoranordnung. Die Sensoranordnung 1 weist insbesondere ein Sensorgehäuse 2 sowie einen Sensor 3, insbesondere Drucksensor, auf. Das Sensorgehäuse 2 besteht dabei aus einer Gehäuseschale 4 sowie einem Gehäusedeckel 5. Bei einer Montage der Sensoranordnung 1 wird nun der Sensor 3 in das Sensorgehäuse 2 eingebracht, wobei der Gehäusedeckel 5 die Gehäuseschale 4 verschließt. Das Sensorgehäuse 2, insbesondere die Gehäuseschale 4, verfügt über Befestigungspunkte 6, über welche sie befestigbar ist, beispielsweise an einer Zwischenwand einer Seitentür eines Kraftfahrzeugs.

Das Sensorgehäuse 2 beziehungsweise die Gehäuseschale 4 weist mehrere Dichtungen 7, 8 und 9 auf, die jeweils geschlossen umlaufend ausgeführt sind. Dabei umgreifen alle der Dichtungen 7, 8 und 9 eine gedachte gemeinsame Achse 10 in Umfangsrichtung (bezüglich eben dieser Achse 10) vollständig. Die Dichtung 7 ist als Auflagedichtung ausgeführt, welche nach einer Montage der Sensoranordnung 1 an einer Gegenfläche anliegt, die beispielsweise von einem Bereich der Zwischenwand der Seitentür gebildet ist. Mithilfe der Dichtung 8 wird dagegen ein dichtes Abschließen zwischen Gehäuseschale 4 und Gehäusedeckel 5 realisiert. Eine Dichtfläche des Gehäusedeckels 5 tritt also bei einer Montage des Gehäusedeckels 5 an die Gehäuseschale 4 vollflächig und über den gesamten Umfang mit der Dichtung 8 in Dichtverbindung, sodass ein hier nicht gesondert gekennzeichneter Innenraum des Sensorgehäuses 2, in welchem insbesondere der Sensor 3 vorliegt, gegenüber einer Umgebung der Sensoranordnung 1 dicht verschlossen ist.

Die Dichtung 9 dient als Auflagefläche für den Sensor 3 beziehungsweise dem Abdichten einer Fluidverbindung von der Außenumgebung zu dem Sensor 3 gegenüber dem Innenraum des Sensorgehäuses 2. Die Fluidverbindung liegt dabei über einem Durchbruch 11 der Gehäuseschale 4 vor, welcher von der Dichtung 9 in Umfangsrichtung vollständig umfasst wird. Wird der Sensor 3 auf der Dichtung 9 angeordnet, so steht nachfolgend lediglich ein dem Durchbruch 11 zugewandter Bereich des Sensors 3 über diesen mit der Außenumgebung in Fluidverbindung. Der Durchbruch 11 durchgreift die Gehäuseschale 4 ausgehend von dem Sensor 3 in Richtung der Achse 10 vollständig, durchgreift also auch die dem Innenraum des Sensorgehäuses 2 gegenüberliegende Seite an einer Mündungsstelle. Diese Mündungsstelle ist dabei vorzugsweise in Umfangsrichtung vollständig von der Dichtung 7 umgriffen.

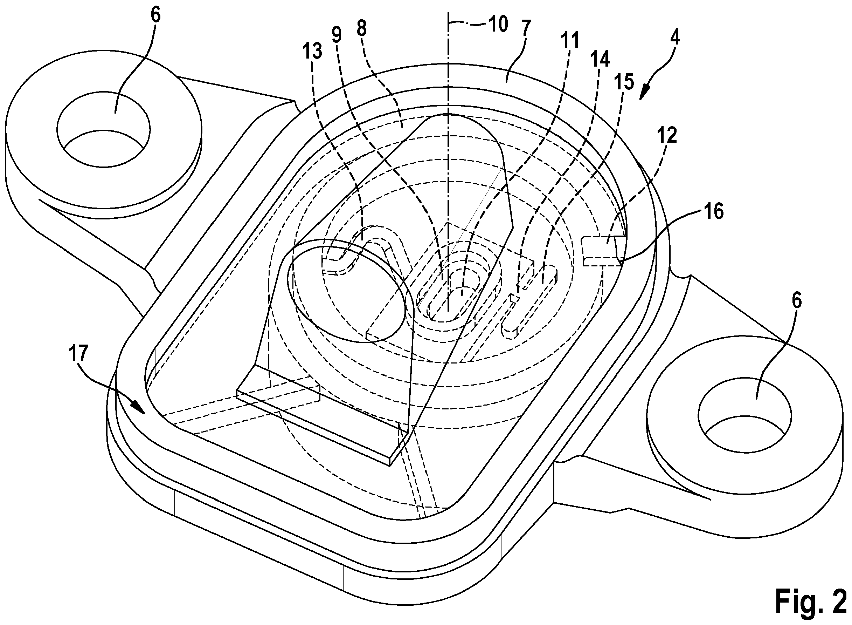

Die Figur 2 zeigt eine Detailansicht der Gehäuseschale 4, wobei einzelne Bereiche transparent dargestellt sind, um die Dichtungen 8 und 9 sichtbar zu machen. Grundsätzlich wird auf die vorstehenden Ausführungen verwiesen. Entsprechend wird deutlich, dass die Dichtung 7 einerseits und die Dichtungen 8 und 9 andererseits auf gegenüberliegenden Seiten der Gehäuseschale 4 angeordnet sind. Es ist erkennbar, dass die Dichtung 7 über einen Verbindungssteg 12 mit der Dichtung 8, die Dichtung 8 über einen Verbindungssteg 13 mit der Dichtung 9 und die Dichtung 9 über einen weiteren Verbindungssteg 14 mit einem Überlauf 15 einstückig und materialeinheitlich verbunden sind. Weil die Dichtungen 7, 8 und 9 auf gegenüberliegenden Seiten der Gehäuseschale 4 vorliegen, durchgreift der Verbindungssteg 12 einen Durchbruch 16 der Gehäuseschale 4. Der Durchbruch 16 mündet beispielsweise auf der der Dichtung 7 zugewandten Seite der Gehäuseschale 4 unmittelbar unter der Dichtung 7 ein, während er auf der anderen Seite der Gehäuseschale 4 unmittelbar unter der Dichtung 8 einmündet.

Die Dichtungen 7, 8 und 9, die Verbindungsstege 12, 13 und 14 sowie der Überlauf 15 werden mithilfe einer Gussform hergestellt, welche hier nicht gezeigt ist. Diese Gussform wird zum Herstellen des Sensorgehäuses 2 beziehungsweise der Gehäuseschale 4 in letztere eingebracht, sodass mehrere in Umfangsrichtung geschlossen ausgestaltete Dichtungsaufnahmekanäle ausgebildet sind. Jeweils zwei dieser Dichtungsaufnahmekanäle werden nun über einen Überlaufkanal strömungstechnisch miteinander verbunden. Nachfolgend wird ein Gießmaterial über einen einzigen der Dichtungsaufnahmekanäle an einem Einspritzpunkt eingeleitet, bis alle Dichtungsaufnahmekanäle mit dem Gießmaterial gefüllt sind.

Im Bereich der Dichtungsaufnahmekanäle liegen nun die Dichtungen 7, 8 und 9 vor, während die Verbindungsstege 12, 13 und 14 von den Überlaufkanälen dargestellt sind. Überschüssiges Gießmaterial beziehungsweise noch in dem Gießmaterial enthaltene Lufteinschlüsse oder Lunker werden über den, den Verbindungssteg 14 ausbildenden Überlaufkanal in einen Überlaufraum gedrängt, welcher nachfolgend den Überlauf 15 ausformt. Auf diese Art und Weise können die Dichtungen 7, 8 und 9 in einem einzigen Arbeitsschritt hergestellt werden. Das Einleiten des Gießmaterials erfolgt an einem Einspritzpunkt 17, der hier lediglich beispielhaft angedeutet ist.

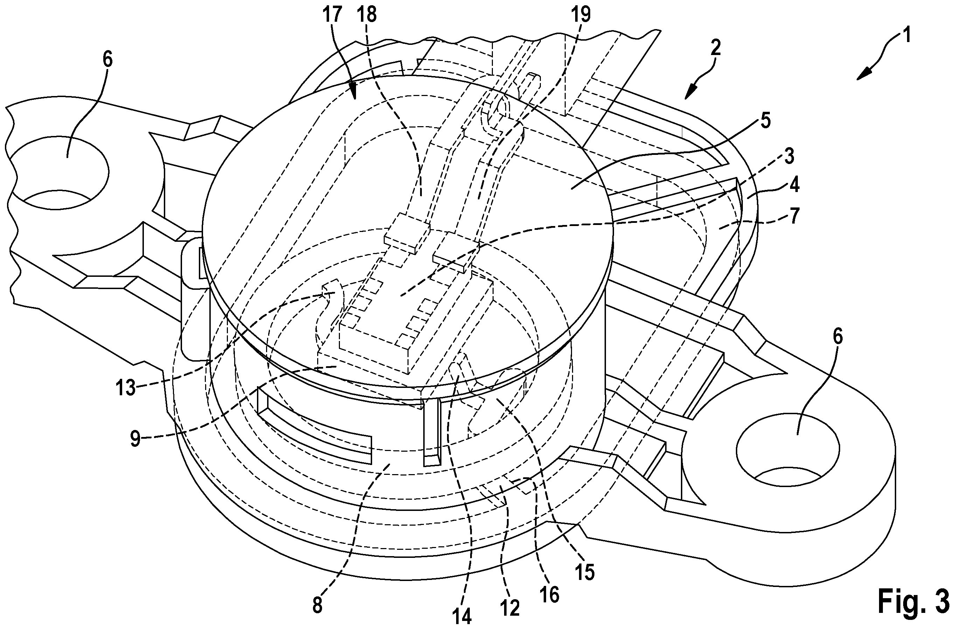

Die Figur 3 zeigt die Sensoranordnung 1 in montierter Form. Es wird nun deutlich, dass der Sensor 3 auf der Dichtung 9 aufliegt. Elektrisch ist er über Anschlüsse 18 und 19 kontaktiert, welche somit insbesondere in dem Trockenraum der Seitentür des Kraftfahrzeugs angeordnet sind. In dieser Darstellung wird deutlich, dass die Dichtungen 7, 8 und 9 in vertikaler Richtung, also entlang der Achse 10, und in radialer Richtung jeweils an unterschiedlichen Positionen ausgebildet sind.

## Patentansprüche

1. Verfahren zum Herstellen eines Sensorgehäuses (2), das wenigstens eine Gehäuseschale (4) und mehrere an der Gehäuseschale (4) angeordnete, geschlossen umlaufende Dichtungen (7,8,9) aufweist, wobei bei dem Ausbilden der Dichtungen (7,8,9) jeweils zwei der Dichtungen (7,8,9) über einen einstückig und materialeinheitlich mit den Dichtungen (7,8,9) ausgebildeten Verbindungssteg (12,13) miteinander verbunden werden mit den Schritten:
- Bereitstellen der Gehäuseschale (4),
- Einbringen der Gehäuseschale (4) in eine Gussform, sodass mehrere in Umfangsrichtung geschlossen ausgeschaltete Dichtungsaufnahmekanäle ausgebildet sind, wobei jeweils zwei der Dichtungsaufnahmekanäle über einen Überlaufkanal strömungstechnisch miteinander verbunden werden,
- Einleiten eines Gießmaterials über einen einzigen der Dichtungsaufnahmekanäle an einem Einspritzpunkt (17), bis alle der Dichtungsaufnahmekanäle mit dem Gießmaterial gefüllt sind, zum Ausbilden der Dichtungen (7,8,9) in allen Dichtungsaufnahmekanälen,
**dadurch gekennzeichnet, dass** zusätzlich zu den Dichtungsaufnahmekanälen ein Überlaufraum (15) ausgebildet ist, wobei der in Strömungsrichtung des Gießmaterials am weitesten stromabwärts angeordnete der Dichtungsaufnahmekanäle über einen weiteren Überlaufkanal mit dem Überlaufraum strömungsverbunden ist.

2. Verfahren nach Anspruch 1, **dadurch gekennzeichnet, dass** wenigstens zwei der Dichtungsaufnahmekanäle auf gegenüberliegenden Seiten der Gehäuseschale (4) ausgebildet werden, wobei zumindest einer der Überlaufkanäle wenigstens teilweise in Form eines die Gehäuseschale (4) durchgreifenden Durchbruchs (16) ausgebildet wird.

3. Verfahren nach einem der vorhergehenden Ansprüche, **dadurch gekennzeichnet, dass** wenigstens zwei der Dichtungsaufnahmekanäle in vertikaler Richtung und/oder in radialer Richtung an unterschiedlichen Positionen ausgebildet werden.

4. Verfahren nach einem der vorhergehenden Ansprüche, **dadurch gekennzeichnet, dass** die Dichtungsaufnahmekanäle derart ausgebildet werden, dass alle der Dichtungsaufnahmekanäle eine gedachte gemeinsame Achse (10) in Umfangsrichtung vollständig umgreifen.

5. Verfahren nach einem der vorhergehenden Ansprüche, **dadurch gekennzeichnet, dass** der Einspritzpunkt (17) demjenigen der Überlaufkanäle gegenüberliegend angeordnet wird, der demselben der Dichtungsaufnahmekanäle zugeordnet ist wie der Einspritzpunkt (17).

6. Verfahren nach einem der vorhergehenden Ansprüche, **dadurch gekennzeichnet, dass** zwei der Überlaufkanäle, die an Mündungsstellen in denselben der Dichtungsaufnahmekanäle einmünden, derart ausgebildet werden, dass sich die Mündungsstellen bezüglich dieses Dichtungsaufnahmekanals gegenüberliegen.

7. Verfahren nach einem der vorhergehenden Ansprüche, **dadurch gekennzeichnet, dass** bei einer Montage ein Gehäusedeckel (5) mit wenigstens einer der Dichtungen (7) derart in Dichtkontakt gebracht wird, dass die Dichtung (7) zum dichtenden Abdecken in Richtung eines die Gehäuseschale (4) durchgreifenden Durchbruchs (11) gedrängt wird.

8. Sensorgehäuse (2) hergestellt nach einem oder mehreren der vorhergehenden Ansprüche, mit wenigstens einer Gehäuseschale (4) und mehreren an der Gehäuseschale (4) angeordneten, geschlossen umlaufenden Dichtungen, wobei jeweils zwei der Dichtungen (7,8,9) über einen einstückig und materialeinheitlich mit den Dichtungen (7,8,9) ausgebildeten Verbindungssteg (12,13) miteinander verbunden sind und einem Überlaufraum, wobei der in Strömungsrichtung des Gießmaterials am weitesten stromabwärts angeordnete der Dichtungsaufnahmekanäle über einen weiteren Überlaufkanal mit dem Überlaufraum strömungsverbunden ist.

## Claims

1. Method for producing a sensor housing (2) which has at least one housing shell (4) and multiple seals (7, 8, 9) which are arranged on the housing shell (4) and which are of closed encircling form, wherein, during the formation of the seals (7, 8, 9), in each case two of the seals (7, 8, 9) are connected to one another by way of a connecting web (12, 13) which is formed in unipartite fashion and materially integrally with the seals (7, 8, 9) having the steps:
- providing the housing shell (4),
- placing the housing shell (4) into a casting mold such that multiple seal-receiving channels which are of closed form in a circumferential direction are formed, wherein in each case two of the seal-receiving channels are connected to one another in terms of flow by way of an overflow channel,
- introducing a casting material via a single one of the seal-receiving channels at an injection point (17), until all of the seal-receiving channels are filled with the casting material, in order to form the seals (7, 8, 9) in all of the seal-receiving channels,
**characterized in that**
an overflow chamber (15) is formed in addition to the seal-receiving channels, wherein that one of the seal-receiving channels which is arranged furthest downstream as viewed in the flow direction of the casting material is connected in terms of flow via a further overflow channel to the overflow chamber.

2. Method according to Claim 1, **characterized in that** at least two of the seal-receiving channels are formed on opposite sides of the housing shell (4), wherein at least one of the overflow channels is formed at least partially in the manner of an aperture (16) extending through the housing shell (4).

3. Method according to one of the preceding claims, **characterized in that** at least two of the seal-receiving channels are formed at different positions in a vertical direction and/or in a radial direction.

4. Method according to one of the preceding claims, **characterized in that** the seal-receiving channels are designed such that all of the seal-receiving channels extend in a circumferential direction all the way around an imaginary common axis (10).

5. Method according to one of the preceding claims, wherein the injection point (17) is arranged so as to be situated opposite that one of the overflow channels which is assigned to the same one of the seal-receiving channels as the injection point (17).

6. Method according to one of the preceding claims, **characterized in that** two of the overflow channels which open at opening points into the same one of the seal-receiving channels are designed such that the opening points are situated oppositely with respect to said seal-receiving channel.

7. Method according to one of the preceding claims, **characterized in that**, during an assembly process, a housing cover (5) is placed in sealing contact with at least one of the seals (7) such that the seal (7) is forced in the direction of an aperture (11) penetrating the housing shell (4) in order to impart a sealing covering action.

8. Sensor housing (2) produced according to one or more of the preceding claims, having at least one housing shell (4) and having multiple seals (7, 8, 9) which are arranged on the housing shell (4) and which are of closed encircling form, wherein in each case two of the seals (7, 8, 9) are connected to one another by way of a connecting web (12, 13) which is formed in unipartite fashion and materially integrally with the seals (7, 8, 9), and having an overflow chamber wherein that one of the seal-receiving channels which is arranged furthest downstream as viewed in the flow direction of the casting material is connected in terms of flow via a further overflow channel to the overflow chamber.

## Revendications

1. Procédé de fabrication d'un boîtier de capteur (2), qui présente au moins une coque de boîtier (4) et plusieurs joints périphériques fermés (7, 8, 9) disposés sur la coque de boîtier (4), dans lequel lors de la formation des joints (7, 8, 9) chaque fois deux des joints (7, 8, 9) sont reliés l'un à l'autre par une nervure de liaison (12, 13) formée d'une seule pièce et en unité de matière avec les joints (7, 8, 9), comprenant les étapes suivantes:
- préparer la coque de boîtier (4),
- introduire la coque de boîtier (4) dans un moule de coulée, de telle manière que plusieurs canaux de logement de joint déconnectés fermés en direction périphérique soient formés, dans lequel chaque fois deux des canaux de logement de joint sont reliés l'un à l'autre en technique d'écoulement par un canal de débordement,
- introduire une matière de coulée par un seul des canaux de logement de joint à un point d'injection (17), jusqu'à ce que tous les canaux de logement de joint soient remplis de la matière de coulée, afin de former les joints (7, 8, 9) dans tous les canaux de logement de joint,
**caractérisé en ce qu'**une chambre de débordement (15) est formée en plus des canaux de logement de joint, dans lequel le canal de logement de joint disposé le plus loin en aval dans la direction d'écoulement de la matière de coulée est relié en écoulement à la chambre de débordement au moyen d'un autre canal de débordement.

2. Procédé selon la revendication 1, **caractérisé en ce qu'**au moins deux des canaux de logement de joint sont formés sur deux côtés opposés de la coque de boîtier (4), dans lequel au moins un des canaux de logement de joint est réalisé au moins partiellement sous la forme d'un passage (16) traversant la coque de boîtier (4).

3. Procédé selon l'une quelconque des revendications précédentes, **caractérisé en ce qu'**au moins deux des canaux de logement de joint sont formés à différentes positions en direction verticale et/ou en direction radiale.

4. Procédé selon l'une quelconque des revendications précédentes, **caractérisé en ce que** les canaux de logement de joint sont réalisés de telle manière que tous les canaux de logement de joint entourent entièrement en direction périphérique un axe commun virtuel (10).

5. Procédé selon l'une quelconque des revendications précédentes, **caractérisé en ce que** le point d'injection (17) est disposé en face de celui des canaux de débordement qui est associé au même des canaux de logement de joint que le point d'injection (17).

6. Procédé selon l'une quelconque des revendications précédentes, **caractérisé en ce que** deux des canaux de débordement, qui débouchent à des points d'embouchure dans le même des canaux de logement de joint, sont réalisés de telle manière que les points d'embouchure se fassent face par rapport à ce canal de logement de joint.

7. Procédé selon l'une quelconque des revendications précédentes, **caractérisé en ce que** lors d'un montage un couvercle de boîtier (5) est placé en contact étanche avec au moins un des joints (7), de telle manière que le joint (7) soit repoussé en recouvrement étanche en direction d'un passage (11) traversant la coque de boîtier (4).

8. Boîtier de capteur (2) fabriqué selon une ou plusieurs des revendications précédentes, avec au moins une coque de boîtier (4) et plusieurs joints périphériques fermés disposés sur la coque de boîtier (4), dans lequel chaque fois deux des joints (7, 8, 9) sont reliés l'un à l'autre par une nervure de liaison (12, 13) formée d'une seule pièce et en unité de matière avec les joints (7, 8, 9), et avec une chambre de débordement, dans lequel le canal de logement de joint disposé le plus loin en aval dans la direction d'écoulement de la matière de coulée est relié en écoulement à la chambre de débordement au moyen d'un autre canal de débordement.
